# EUROPEAN PATENT SPECIFICATION

(11) **EP 1 479 749 B1**
(45) Date of publication and mention of the grant of the patent: **03.01.2007**
(21) Application number: 04252614.5
(22) Date of filing: 05.05.2004
(51) Int. Cl.: C10L 1/00, C10M 171/00

(54) **Method for marking hydrocarbons with substituted anthraquinones**
Verfahren zum Markieren von flüssigen Petroleumkohlenwasserstoffen
Procédé de marquage des hydrocarbures liquides dérivés du pétrole

(30) Priority: 23.05.2003 US 472993 P
(43) Date of publication of application: 24.11.2004
(73) Proprietor: ROHM AND HAAS COMPANY, Philadelphia PA 19106-2399 (US)
(72) Inventor: Ho, Kim Sang, Richboro, Pennsylvania 18954 (US); Baxter, David Roderick, Mirfield, West Yorkshire WF14 0EX (GB)
(74) Representative: Kent, Venetia Katherine

(56) References cited:
- EP-A- 1 001 003
- US-A- 2 727 045
- US-A- 4 755 012
- US-A- 5 525 516
- PATENT ABSTRACTS OF JAPAN vol. 0111, no. 92 (C-429), 19 June 1987 (1987-06-19) & JP 62 015260 A (MITSUI TOATSU CHEM INC), 23 January 1987 (1987-01-23)
- PATENT ABSTRACTS OF JAPAN vol. 0111, no. 63 (C-424), 26 May 1987 (1987-05-26) & JP 61 291652 A (MITSUI TOATSU CHEM INC), 22 December 1986 (1986-12-22)
- PATENT ABSTRACTS OF JAPAN vol. 0110, no. 96 (C-412), 26 March 1987 (1987-03-26) & JP 61 246258 A (MITSUI TOATSU CHEM INC), 1 November 1986 (1986-11-01)

## Description

### Background

This invention relates generally to a method for marking petroleum hydrocarbons with substituted anthraquinone compounds for subsequent identification.

Substituted dicyanoanthraquinones, including the following structure, 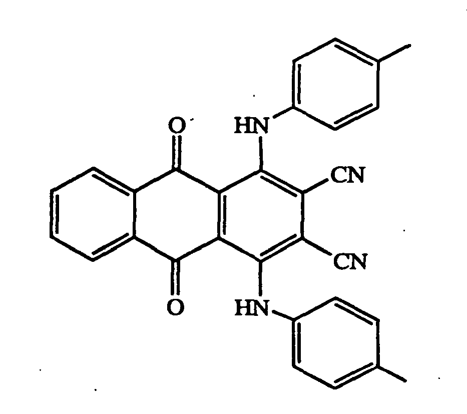 were disclosed in Japanese Patent Application JP61-246258 as colorants for an optical filter. This reference, however, does not suggest a method for marking petroleum hydrocarbons.

US-A-5 525 516 discloses a method of imparting invisible markings for the identification of petroleum hydrocarbons using certain infrared flurophores from the classes of squaraines, phthalocyanines and naphthalocyanines.

A variety of dyes has been used to mark petroleum hydrocarbons. Some of these are expensive, difficult to prepare, or unstable. Combinations of dyes can be used as digital marking systems, with the ratios of amounts forming a code for the marked product. Additional compounds useful as petroleum markers would be desirable to maximize the available codes. The problem addressed by this invention is to find additional markers useful for marking petroleum hydrocarbons.

### Statement of Invention

The present invention is directed to a method for marking a liquid petroleum hydrocarbon. The method comprises adding to the liquid petroleum hydrocarbon at least one substituted anthraquinone dye having formula (I) 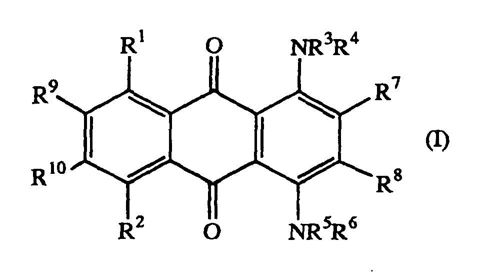 wherein R¹ and R² independently are hydrogen, hydroxy, OR¹¹, amino or NR¹¹R¹²; R³ and R⁵ independently are alkyl, aryl, aralkyl, heteroalkyl or heterocyclic; R⁴ and R⁶ independently are hydrogen or alkyl; R⁷, R⁸, R⁹ and R¹⁰ independently are cyano, nitro or hydrogen, provided that at least two of R⁷, R⁸, R⁹ and R¹⁰ are cyano or nitro; R¹¹ is alkyl, aryl, aralkyl, heteroalkyl, heterocyclic or alkanoyl; R¹² is hydrogen or alkyl; wherein the substituted anthraquinone dye(s) has an absorption maximum in the range from 690 nm to 1000 nm and further wherein the amount of said at least one substituted anthraquinone dye is less than 2ppm.

### Detailed Description

All percentages are weight percentages, unless otherwise indicated. Concentrations in parts per million ("ppm") are calculated on a weight/volume basis. When a solvent is not specified for measurement of an absorption maximum, a hydrocarbon solvent is preferred. Extinction values are determined by measuring absorption in absorbance units ("AU") with a 1 cm path length on 10 mg/L solutions. The term "petroleum hydrocarbons" refers to products having a predominantly hydrocarbon composition, although they may contain minor amounts of oxygen, nitrogen, sulfur or phosphorus; petroleum hydrocarbons are derived from petroleum refining processes; they include, for example, lubricating oil, hydraulic fluid, brake fluid, gasoline, diesel fuel, kerosene, jet fuel and heating oil. An "alkyl" group is a hydrocarbyl group having from one to twenty carbon atoms in a linear, branched or cyclic arrangement. Alkyl groups optionally have one or more double or triple bonds. Substitution on alkyl groups of one or more halo, hydroxy or alkoxy groups is permitted; alkoxy groups may in turn be substituted by one or more halo substituents. Preferably, alkyl groups have no halo or alkoxy substituents, and most preferably, alkyl groups are saturated and unsubstituted. A "heteroalkyl" group is an alkyl group in which at least one carbon has been replaced by O, NR, or S, wherein R is hydrogen, alkyl, aryl or aralkyl. An "aryl" group is a substituent derived from an aromatic hydrocarbon compound. An aryl group has a total of from six to twenty ring atoms, and has one or more rings which are separate or fused. An "aralkyl" group is an "alkyl" group substituted by an "aryl" group. A "heterocyclic" group is a substituent derived from a heterocyclic compound having from five to twenty ring atoms, at least one of which is nitrogen, oxygen or sulfur. Preferably, heterocyclic groups do not contain sulfur. Substitution on aryl or heterocyclic groups of one or more of the following groups: halo, cyano, nitro, hydroxy, alkoxy, alkyl, heteroalkyl, alkanoyl, amino, or amino substituted by one or more of alkyl, aryl, aralkyl, heterocyclic, heteroalkyl or alkanoyl is permitted, with substitution by one or more halo groups being possible on alkyl, heteroalkyl, alkanoyl or alkoxy groups. Preferably, aryl and heterocyclic groups do not contain halogen atoms. In one preferred embodiment of the invention, aryl and heterocyclic groups are unsubstituted or substituted only by alkyl groups. An "aromatic heterocyclic" group is a heterocyclic group derived from an aromatic heterocyclic compound.

In one embodiment of the invention, R⁴ and R⁶ are hydrogen; in another embodiment, R⁴ and R⁶ are alkyl, preferably C₁-C₄ saturated unsubstituted acyclic alkyl. In one embodiment of the invention, R³, R⁵ and R¹¹ in formula (I) are alkyl, aryl or aromatic heterocyclic. Preferably, R³ and R⁵ represent the same substituent. In one embodiment of the invention, R³ and R⁵ are aryl substituted by at least one C₂-C₂₀ alkyl group or aromatic heterocyclic substituted by at least one C₂-C₂₀ alkyl group; alternatively, R³ and R⁵ are aryl substituted by at least one C₄-C₂₀ alkyl group or aromatic heterocyclic substituted by at least one C₄-C₂₀ alkyl group; preferably R³ and R⁵ are phenyl substituted by at least one C₂-C₂₀ alkyl group, more preferably by at least one C₄-C₂₀ alkyl group. When R³ and R⁵ are aryl or aromatic heterocyclic groups, preferably R⁴ and R⁶ are hydrogen.

In one embodiment of the invention, R³ and R⁵ are alkyl, preferably C₂-C₂₀ alkyl, more preferably C₄-C₂₀ alkyl; preferably R³ and R⁵ are saturated unsubstituted alkyl. In one embodiment of the invention, R³ and R⁵ are C₅-C₈ cyclic alkyl groups; preferably R³ and R⁵ are saturated unsubstituted C₅-C₈ cyclic alkyl groups and R⁴ and R⁶ are hydrogen. In one preferred embodiment, R³ and R⁵ are cyclohexyl. In another preferred embodiment, R³ and R⁵ are C₅-C₈ cyclic alkyl groups, R⁴ and R⁶ are hydrogen, and R¹ and R² are NR¹¹R¹², where R¹² is hydrogen and R¹¹ is C₅-C₈ cyclic alkyl, preferably saturated unsubstituted alkyl; preferably R³ and R⁵ are cyclohexyl and R¹ and R² are cyclohexylamino.

In another preferred embodiment, R³ and R⁵ are aryl substituted by at least one C₂-C₂₀ alkyl group or aromatic heterocyclic substituted by at least one C₂-C₂₀ alkyl group, R⁴ and R⁶ are hydrogen, and R¹ and R² are NHR¹¹, where R¹¹ is aryl substituted by at least one C₂-C₂₀ alkyl group or aromatic heterocyclic substituted by at least one C₂-C₂₀ alkyl group. In one embodiment, R⁷, R⁸, R⁹ and R¹⁰ are cyano or hydrogen. In one embodiment, R⁷, R⁸, R⁹ and R¹⁰ all represent cyano. In one embodiment, R⁷ and R⁸ represent cyano, and R⁹ and R¹⁰ are hydrogen. Preferably, R¹ and R² independently are hydrogen, hydroxy or NR¹¹R¹². Preferably, R¹¹ is alkyl or aryl. In one preferred embodiment of the invention, R¹¹ is C₂-C₂₀ alkyl. Preferably, R¹ and R² represent the same substituent. Most preferably, R¹ and R² represent hydrogen or NR¹¹R¹². In one embodiment, R¹ and R² are NR¹¹R¹², and R³, R⁴, R⁵, R⁶, R¹¹ and R¹² are alkyl, preferably the same alkyl group; in one preferred embodiment, R³, R⁴, R⁵, R⁶, R¹¹ and R¹² are C₁-C₄ saturated unsubstituted acyclic alkyl groups, and most preferably, methyl groups.

In one preferred embodiment of the invention, R⁷ and R⁸ are cyano, R⁴ and R⁶ are hydrogen, R⁹ and R¹⁰ are hydrogen, and a substituted anthraquinone dye has formula (II)

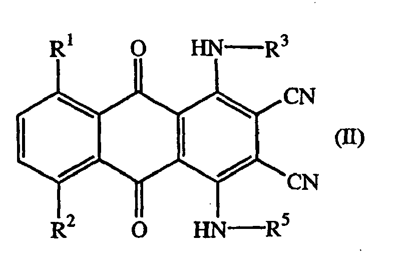

In another preferred embodiment of the invention, R⁷ and R⁸ are cyano, R⁴ and R⁶ are hydrogen, R⁹ and R¹⁰ are hydrogen, R¹ and R² are hydrogen, and a substituted anthraquinone dye has formula (III)

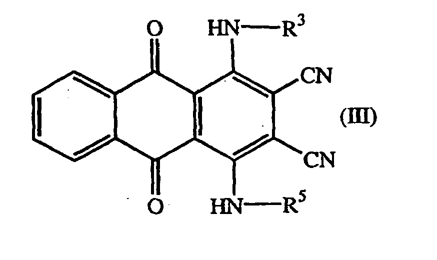

In another preferred embodiment of the invention, R⁷ and R⁸ are cyano, R⁴ and R⁶ are hydrogen, R⁹ and R¹⁰ are hydrogen, R¹ and R² are NHR¹¹, and a substituted anthraquinone dye has formula (IV)

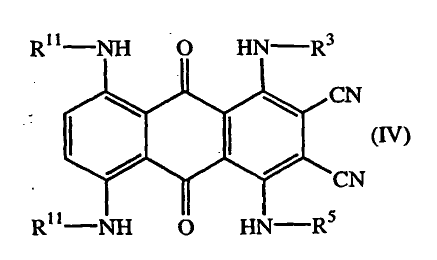

In another preferred embodiment of the invention, R⁷, R⁸, R⁹ and R¹⁰ are cyano, R¹ and R² are NHR¹¹, R⁴ and R⁶ are hydrogen, and a substituted anthraquinone dye has formula (V).

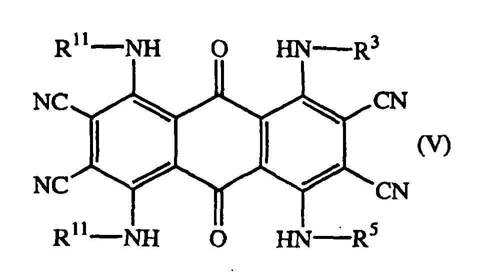

The absorption maxima, λₘₐₓ, of several substituted anthraquinone dyes of formula (I) are provided in the following table. For all of the dyes listed, R⁴ and R⁶ are hydrogen

| R¹, R² | R³, R⁵ | R⁷, R⁸, R⁹, R¹⁰ | λₘₐₓ, nm |
|---|---|---|---|
| H, H | 4-CH₃Ph, 4-CH₃Ph | CN, CN, H, H | 720 |
| H, H | (CH₃)₂CH, (CH₃)₂CH | CN, CN, H, H | 715 |
| H, H | CH₃(CH₂)₃, CH₃(CH₂)₃ | CN, CN, H, H | 700 (xylene) |
| 4-n-BuPhNH, 4-n-BuPhNH | 4-n-BuPh, 4-n-BuPh | CN, CN, H, H | 835 (xylene) |
| 4-n-BuPhNH, 4-n-BuPhNH | 4-n-BuPh, 4-n-BuPh | CN, CN, CN, CN | 900 (xylene) |
| OH, OH | 4-CH₃Ph, 4-CH₃Ph | CN, CN, H, H | 740 |
| OH, OH | CH₃(CH₂)₃, CH₃(CH₂)₃ | CN, CN, H, H | 800 |
| OH, OH | CH₃(CH₂)₁₁, CH₃(CH₂)₁₁ | CN, CN, H, H | 805 |

| | | | |
|---|---|---|---|
| 4-n-BuPh = 4-n-butylphenyh 4-CH₃Ph = 4-methylphenyl | | | |

These values were measured in chloroform, except where a different solvent is listed; values in toluene or other hydrocarbons are expected to be approximately 15 nm to 18 nm lower than values measured in chloroform.

Preferably the amount of each substituted anthraquinone dye of formula (I) added to the petroleum hydrocarbon is at least 0.001 ppm, more preferably at least 0.005 ppm, more preferably at least 0.01 ppm, more preferably at least 0.03 ppm, and most preferably at least 0.05 ppm. Preferably the amount of each dye is less than 2 ppm, more preferably less than 1 ppm and most preferably less than 0.5 ppm. Preferably, the marking is invisible, i.e., the dye cannot be detected by simple visual observation of the marked hydrocarbon. Preferably, a substituted anthraquinone of formula (I) has an absorption maximum in a hydrocarbon solvent of at least 700 nm, more preferably at least 710 nm, more preferably at least 720 nm, more preferably at least 740 nm, and most preferably at least 770 nm. Preferably, a substituted anthraquinone of formula (I) has an absorption maximum in a hydrocarbon solvent of no more than 970 nm, more preferably no more than 930 nm.

In one embodiment of the invention, at least one other dye, not having formula (I), and having an absorption maximum from 690 nm to 1000 nm, but at a wavelength different from that of the substituted anthraquinone of formula (I) is added to the petroleum hydrocarbon. Preferably, the absorption maxima of any two dyes used in the method of this invention, when measured in the same solvent, differ by at least 30 nm, more preferably by at least 50 nm. Preferably, the other dye(s) used in this embodiment has an absorption maximum in a hydrocarbon solvent of at least 700 nm, more preferably at least 710 nm, more preferably at least 720 nm, more preferably at least 740 nm, and most preferably at least 770 nm. Preferably, the other dye(s) has an absorption maximum in a hydrocarbon solvent of no more than 900 nm, more preferably no more than 850 nm, and most preferably no more than 800 nm. In this embodiment of the invention, preferably the other dye(s) is at least one 1,4,5,8-tetrasubstituted anthraquinone dye having formula (VI) 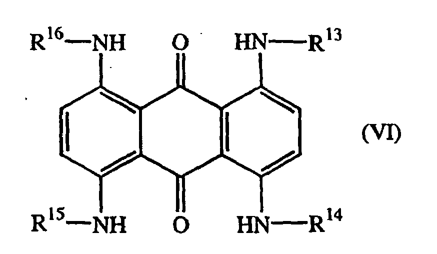 wherein R¹³, R¹⁴, R¹⁵ and R¹⁶ independently are alkyl, aryl, aralkyl, heteroalkyl or heterocyclic. In one embodiment of the invention, at least three of R¹³, R¹⁴, R¹⁵ and R¹⁶ are aryl or aromatic heterocyclic, preferably, all of R¹³, R¹⁴, R¹⁵ and R¹⁶ are aryl. Preferably, R¹³, R¹⁴, R¹⁵ and R¹⁶ represent the same substituent. In one preferred embodiment of the invention, R¹³, R¹⁴, R¹⁵ and R¹⁶ are aryl substituted by at least one C₂-C₂₀ alkyl group or aromatic heterocyclic substituted by at least one C₂-C₂₀ alkyl group, preferably aryl substituted by at least one C₄-C₂₀ alkyl group or aromatic heterocyclic substituted by at least one C₄-C₂₀ alkyl group; preferably R¹³, R¹⁴, R¹⁵ and R¹⁶ are phenyl substituted by at least one C₂-C₂₀ alkyl group, more preferably by at least one C₄-C₂₀ alkyl group. In one embodiment of the invention, R¹³, R¹⁴, R¹⁵ and R¹⁶ are C₅-C₈ cyclic alkyl, preferably cyclohexyl. In another embodiment, R¹³, R¹⁴, R¹⁵ and R¹⁶ are unsubstituted saturated acyclic alkyl, preferably C₂-C₂₀ unsubstituted saturated acyclic alkyl. Preferably the amount of each 1,4,5,8-tetrasubstituted anthraquinone dye added to the petroleum hydrocarbon is at least 0.01 ppm, more preferably at least 0.02 ppm, and most preferably at least 0.03 ppm. Preferably the amount of each dye is less than 10 ppm, more preferably less than 2 ppm, and most preferably less than 1 ppm. A 1,4,5,8-tetrasubstituted anthraquinone dye of formula (VI) also can be used as a marker for a petroleum hydrocarbon without a substituted anthraquinone dye of formula (I).

Another dye suitable for use with a dye of formula (I) is an anthraquinone imine having formula (VII) 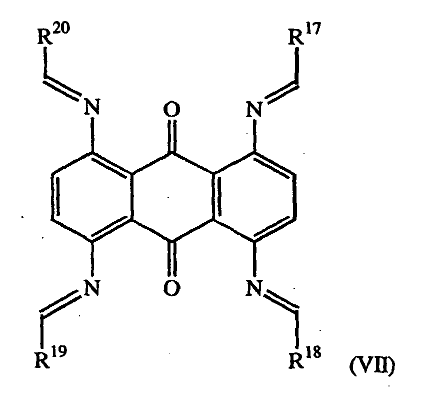 wherein R¹⁷, R¹⁸, R¹⁹ and R²⁰ independently are aryl or aromatic heterocyclic. Preferably, R¹⁷, R¹⁸, R¹⁹ and R²⁰ are the same aryl or aromatic heterocyclic group. Preferably, R¹⁷, R¹⁸, R¹⁹ and R²⁰ are aryl; more preferably R¹⁷, R¹⁸, R¹⁹ and R²⁰ are phenyl or substituted phenyl; and most preferably phenyl or phenyl substituted by one or more of hydroxy, alkyl, alkanoyl, aroyl, aryloxy, aralkyloxy and alkoxy. In one preferred embodiment, R¹⁷, R¹⁸, R¹⁹ and R²⁰ are phenyl substituted by at least one alkyl group, preferably a C₂-C₂₀ alkyl group, more preferably a saturated, unsubstituted C₄-C₂₀ alkyl group. Compounds of formula (VII) can be prepared from condensation of 1,4,5,8-tetraaminoanthraquinone and aryl aldehydes or aromatic heterocyclic aldehydes.

Another dye suitable for use with a dye of formula (I) is a dye of formula (VIII). 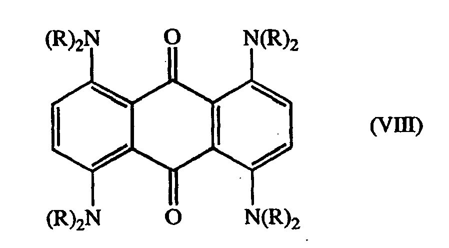 wherein R represents alkyl groups, which may be the same or different. In one embodiment, R is C₁-C₁₂ alkyl, preferably C₁-C₄ alkyl. In one embodiment, R is saturated C₁-C₁₂ alkyl, preferably unsubstituted alkyl. In one embodiment Ris C₁-C₄ saturated unsubstituted acyclic alkyl. Preferably, all R groups are the same alkyl group. Most preferably, all R groups are methyl groups. Preferably the amount of each dye of formula (VIII) added to the petroleum hydrocarbon is at least 0.01 ppm, more preferably at least 0.02 ppm, and most preferably at least 0.03 ppm. Preferably the amount of each dye is less than 10 ppm, more preferably less than 2 ppm, and most preferably less than 1 ppm.

In one embodiment of the invention, at least one dye having an absorption maximum in a hydrocarbon solvent in the range from 630 nm to 720 nm, more preferably from 630 nm to 700 nm, and most preferably from 650 nm to 700 nm, is added to the petroleum hydrocarbon together with a dye of formula (I). Preferably, the dye(s) is a 1,4,5-trisubstituted anthraquinone dye of formula (IX). 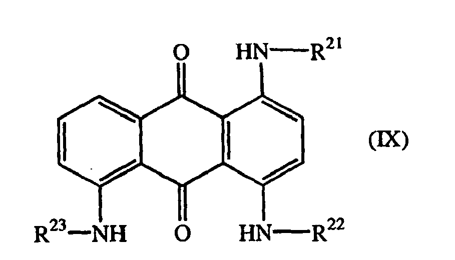 wherein R²¹, R²² and R²³ independently are alkyl, aryl, aralkyl, heteroalkyl or heterocyclic. Preferably, at least two of R²¹, R²² and R²³ are aryl or aromatic heterocyclic. More preferably, all three of R²¹, R²² and R²³ are aryl or aromatic heterocyclic. Most preferably, all three of R²¹, R²² and R²³ are aryl. Preferably, R²¹, R²² and R²³ represent the same substituent. In one preferred embodiment of the invention, R²¹, R²² and R²³ are aryl substituted by at least one C₂-C₂₀ alkyl group or aromatic heterocyclic substituted by at least one C₂-C₂₀ alkyl group; aryl substituted by at least one C₄-C₂₀ alkyl group or aromatic heterocyclic substituted by at least one C₄-C₂₀ alkyl group; preferably R²¹, R²² and R²³ are phenyl substituted by at least one C₂-C₂₀ alkyl group, more preferably by at least one C₄-C₂₀ alkyl group. 1,4,5-trisubstituted anthraquinones can be prepared from commercially available 1,4,5-trichloroanthraquinone, whose preparation is reported in the prior art (see U.S. Pat. Nos. 4,006,171 and 4,162,946).

In one preferred embodiment of the invention, a substituted anthraquinone dye of formula (I), a 1,4,5,8-tetrasubstituted anthraquinone dye having formula (VI), and a 1,4,5-trisubstituted anthraquinone dye of formula (IX) are added to a petroleum hydrocarbon to comprise a coding system enabling identification of the hydrocarbon according to the relative amounts of the three types of dyes, provided that the absorption maxima, measured in the same solvent, for any pair of dyes are separated by at least 30 nm. In this embodiment, preferably the 1,4,5-trisubstituted anthraquinone dye of formula (VII) has an absorption maximum in a hydrocarbon solvent from 650 nm to 700 nm, the 1,4,5,8-tetrasubstituted anthraquinone dye having formula (V) has an absorption maximum in a hydrocarbon solvent from 720 nm to 770 nm, and the substituted anthraquinone dye of formula (I) has an absorption maximum in a hydrocarbon solvent from 780 nm to 900 nm.

Preferably, the dyes are detected by exposing the marked hydrocarbon to electromagnetic radiation having wavelengths in the portion of the spectrum containing the absorption maxima of the dyes and detecting the absorption of light or fluorescent emissions. It is preferred that the detection equipment is capable of calculating dye concentrations and concentration ratios in a marked hydrocarbon. Typical spectrophotometers known in the art are capable of detecting the dyes used in the method of this invention when they are present at a level of at least 0.01 ppm. It is preferred to use the detectors described in U.S. Pat. No. 5,225,679, especially the SpecTrace^{™} analyzer available from Rohm and Haas Company, Philadelphia, PA. These analyzers use a filter selected based on the absorption spectrum of the dye, and use chemometric analysis of the signal by multiple linear regression methods to reduce the signal-to-noise ratio.

When the detection method does not involve performing any chemical manipulation of the marked hydrocarbon, the sample may be returned to its source after testing, eliminating the need for handling and disposal of hazardous chemicals. This is the case, for example, when the dyes are detected simply by measuring light absorption by a sample of the marked hydrocarbon.

In one embodiment of the invention, the dye is formulated in a solvent to facilitate its addition to the liquid hydrocarbon. The preferred solvents for substituted anthraquinone dyes are N-methylpyrrolidinone, N,N-dimethyl propylene urea, nitrobenzene, toluene, N,N-dimethylformamide and 2-sec-butylphenol. Preferably, the dye is present in the solvent at a concentration of from 0.1% to 10%.

In one embodiment of the invention, at least one substituted anthraquinone dye of formula (I) having an absorption maximum from 690 nm to 1000 nm, and optionally another dye having an absorption maximum from 690 nm to 1000 nm, are added to a petroleum hydrocarbon with at least one visible dye; i.e., a dye having an absorption maximum in the range from 500 nm to 700 nm, preferably from 550 nm to 700 nm, and most preferably from 550 nm to 650 nm. Preferably, each visible dye is added in an amount of at least 0.1 ppm, preferably at least 0.2 ppm, and most preferably at least 0.5 ppm. Preferably, the amount of each visible dye is no more than 10 ppm, more preferably no more than 5 ppm, more preferably no more than 3 ppm, and most preferably no more than 2 ppm. In a preferred embodiment, the visible dyes are selected from the classes of anthraquinone dyes and azo dyes. Suitable anthraquinone dyes having an absorption maximum in this region include, for example, 1,4-disubstituted anthraquinones having alkylamino, arylamino or aromatic-heterocyclic-amino substituents at the 1 and 4 positions. Suitable azo dyes having an absorption maximum in this region include the bisazo dyes, for example, those having the structure Ar-N=N-Ar-N=N-Ar, in which Ar is an aryl group, and each Ar may be different. Specific examples of suitable commercial anthraquinone and bisazo dyes having an absorption maximum in this region are listed in the Colour Index, including C.I. Solvent Blue 98, C.I. Solvent Blue 79, C.I. Solvent Blue 99 and C.I. Solvent Blue 100.

Incorporation of at least one substituted anthraquinone dye of formula (I) having an absorption maximum in the region from 690 nm to 1000 nm allows identification of the liquid hydrocarbon by spectrophotometric means in a spectral region relatively free of interference. Low levels of these dyes are detectable in this region, allowing for a cost-effective marking process, and availability of multiple dyes allows coding of information via the amounts and ratios of the dyes. For these reasons, additional compounds absorbing in this range, and suitable as fuel markers, are extremely useful.

Combinations of substituted anthraquinone dyes of formula (I) having absorption maxima in the region from 690 nm to 1000 nm with markers detectable in the region from 500 nm to 700 nm also are useful. Incorporation of higher levels of at least one visible dye having an absorption maximum in the region from 500 nm to 700 nm, preferably from 550 nm to 650 nm, facilitates quantitative spectrophotometric determination in this region. Accurate determination of the dye levels allows the amounts and ratios of the dyes to serve as parts of a code identifying the hydrocarbon. Since dyes absorbing from 550 nm to 650 nm often are less costly, use of a higher level will not greatly increase the overall cost of the marking process. Thus, the combination of the two kinds of dyes increases the flexibility and minimizes the cost of the marking process.

### Examples

### Example 1: Synthesis of 1,4-di-(n-butylamino)-2,3-dicyanoanthraquinone.

A mixture of 25.7 parts of Solvent Blue 35 {1,4- di-(n-butylamino)-anthraquinone}, 14.8 parts of NaCN, 10 parts of NH₄HCO₃, and 100 parts of dimethyl sulfoxide (DMSO) was allowed to react at 90-95°C for 6 hours to give 1,4-di-(n-butylamino)-2,3-dicyanoanthraquinone. This material has a maximum absorption band (λₘₐₓ) at a wavelength of 700 nm in xylene with an extinction value of 0.23 AU for 10 mg/L.

### Example 2: Synthesis of 1,4,5,8-tetra-(4'-n-butylphenylamino)-2,3-dicyanoanthraquinone and 1,4,5,8 -tetra(4'-n-butylphenylamino)-2,3,6,7-tetracyanoanthraquinone.

A mixture of 8.0 parts of 1,4,5,8 -tetra(4'-n-butylphenylamino)-anthraquinone, 2.53 parts of NaCN, 1.65 parts of NH₄HCO₃, and 39 parts of DMSO was allowed to react at 90-95°C for 6 hours to give 1,4,5,8-tetra-(4'-n-butylphenylamino)-2,3-dicyanoanthraquinone. The structure of the di-cyano product was confirmed by proton and carbon-13 NMR. This material has a maximum absorption band (λₘₐₓ) at a wavelength of 835 nm in xylene with an extinction value of 0.342 AU for 10 mg/L. Longer reaction time also gave rise to the 1,4,5,8 -tetra(4'-n-butylphenylamino)-2,3,6,7-tetracyanoanthraquinone. The structure of the tetra-cyano product also was confirmed by proton and carbon-13 NMR. This material has a maximum absorption band (λₘₐₓ) at a wavelength of 900 nm in xylene with an extinction value of 0.19 AU for 10 mg/L.

### Example 3: Synthesis of 1,4,5-tri(4-n-butylphenylamino)anthraquinone.

A mixture of 10 parts of 1,4,5-trichloroanthraquinone and 95 parts of 4-n-butylaniline was allowed to react at 190°C for 12 hours. The reaction mixture was then cooled to 70°C and diluted with an equal amount of ethanol. On standing and further cooling to ambient temperature, some precipitate is formed. The precipitate was filtered, washed, and recrystallized from a mixture of xylenes and 2-propanol to give 6 parts of a dark blue crystalline material (>95% purity) with the structure confirmed by mass spectrometry as the desired product of 1,4,5-tri(4-n-butylphenylamino)-anthraquinone. This material has a maximum absorption band (λₘₐₓ at a wavelength of 675 nm in toluene.

### Example 4: Synthesis of 1,4,5,8-tetra(phenylamino)anthraquinone

A mixture of 10.87 g of 1,4,5,8-tetrachloroanthraquinone, 50 g of aniline, 13.4 g of potassium acetate, 1.24 g of copper sulfate, and 3.41 g of benzyl alcohol was heated to 130 °C under nitrogen and maintained at this temperature for 6.5 hours, followed by another holding period at 170 °C for 6 hours. The reaction mixture was cooled to ambient temperature and the precipitate was filtered to give black solids. Recrystallization of the crude product from toluene afforded 6.0 g of a dark green crystalline material (> 95% purity with the structure confirmed by proton NMR as the desired product: 1,4,5,8-tetra(phenylamino)anthraquinone. This material had a maximum absorption band (λₘₐₓ) at a wavelength of 750 nm in toluene. The molar extinction coefficient (ε) was determined to be ~30,500.

### Example 5: Synthesis of 1,4,5,8-tetra(4-n-butylphenylamino)anthraquinone

A mixture of 10.87 g of 1,4,5,8-tetrachloroanthraquinone and 95 g of 4-n-butylaniline was allowed to react at 190 °C for 12 hours. The reaction mixture was then cooled to 70 °C and diluted with an equal amount of ethanol. On standing and further cooling to ambient temperature, some precipitate was formed. The mixture was filtered, washed and recrystallized from xylenes/isopropanol to give 6.6 g of a dark green crystalline material (>95% purity) with the structure confirmed by proton NMR as the desired product of 1,4,5,8-tetra(4-n-butylphenylamino)anthraquinone. This material had a maximum absorption band (λₘₐₓ at a wavelength of 762 nm in toluene. The molar extinction coefficient (ε) was determined to be ~36,900.

## Claims

1. A method for marking a liquid petroleum hydrocarbon; said method comprising adding to the liquid petroleum hydrocarbon at least one substituted anthraquinone dye having formula (I) 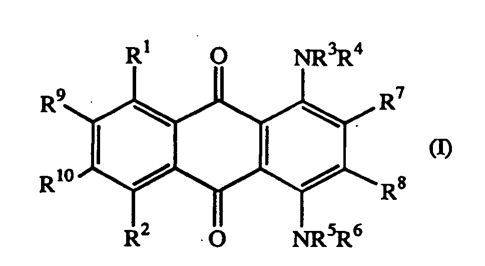 wherein R¹ and R² independently are hydrogen, hydroxy, OR¹¹, amino or NR¹¹R¹²; R³ and R⁵ independently are alkyl, aryl, aralkyl, heteroalkyl or heterocyclic; R⁴ and R⁶ independently are hydrogen or alkyl; R⁷, R⁸, R⁹ and R¹⁰ independently are cyano, nitro or hydrogen, provided that at least two of R⁷, R⁸, R⁹ and R¹⁰ are cyano or nitro; R¹¹ is alkyl, aryl, aralkyl, heteroalkyl, heterocyclic or alkanoyl; R¹² is hydrogen or alkyl; wherein said at least one substituted anthraquinone dye has an absorption maximum in the range from 690 nm to 1000 nm and further wherein the amount of said at least one substituted anthraquinone dye is less than 2ppm.

2. The method of claim 1 in which R⁷, R⁸, R⁹ and R¹⁰ independently are cyano or hydrogen, and R¹ and R² represent hydrogen, hydroxy or NR¹¹R¹².

3. The method of claim 2 in which R³ and R⁵ are C₅-C₈ cyclic alkyl, unsubstituted saturated acyclic alkyl, aryl substituted by at least one C₂-C₂₀ alkyl group, or aromatic heterocyclic substituted by at least one C₂-C₂₀ alkyl group; and said at least one substituted anthraquinone dye has an absorption maximum in a hydrocarbon solvent in the range from 710 nm to 970 nm.

4. The method of claim 1 further comprising at least one 1,4,5,8-tetrasubstituted anthraquinone dye having an absorption maximum in a hydrocarbon solvent from 690 nm to 800 nm and having formula (VI) 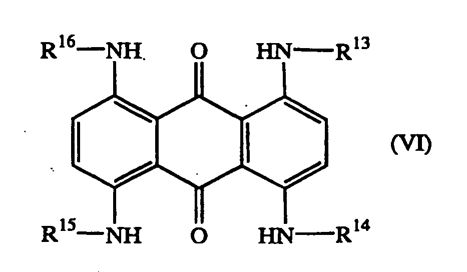 wherein R¹³, R¹⁴, R¹⁵ and R¹⁶ independently are alkyl, aryl, aralkyl, heteroalkyl or heterocyclic; provided that the dye of formula (I) and the dye of formula (VI) have absorption maxima separated by at least 30 nm.

5. The method of claim 4 in which R¹³, R¹⁴, R¹⁵ and R¹⁶ are aryl substituted by at least one C₂-C₂₀ alkyl group, aromatic heterocyclic substituted by at least one C₂-C₂₀ alkyl group, C₅-C₈ cyclic alkyl or unsubstituted saturated acyclic alkyl; and R⁷, R⁸, R⁹ and R¹⁰ independently are cyano or hydrogen.

6. The method of claim 1 further comprising at least one 1,4,5-trisubstituted anthraquinone dye having an absorption maximum in a hydrocarbon solvent from 630 nm to 700 nm and having formula (IX) 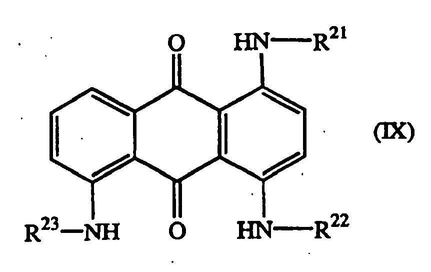 wherein R²¹, R²² and R²³ independently are alkyl, aryl, aralkyl, heteroalkyl or heterocyclic; provided that the dye of formula (I) and the dye of formula (VIII) have absorption maxima separated by at least 30 nm.

7. The method of claim 6 in which R²¹, R²² and R²³ are aryl substituted by at least one C₂-C₂₀ alkyl group or aromatic heterocyclic substituted by at least one C₂-C₂₀ alkyl group; and R⁷, R⁸, R⁹ and R¹⁰ independently are cyano or hydrogen.

8. The method of claim 1 further comprising at least one visible dye having an absorption maximum from 550 nm to 650 nm.

9. The method of claim 4 further comprising at least one 1,4,5-trisubstituted anthraquinone dye having an absorption maximum in a hydrocarbon solvent from 630 nm to 700 nm and having formula (IX) 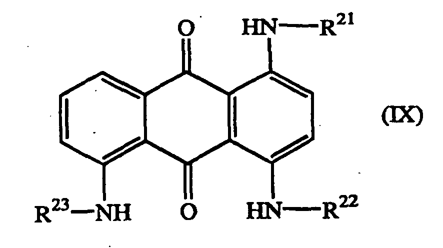 wherein R²¹, R²² and R²³ independently are alkyl, aryl, aralkyl, heteroalkyl or heterocyclic; provided that absorption maxima of any pair of the dyes of formula (I), formula (VI) and formula (IX) are separated by at least 30 nm.

10. The method of claim 9 in which R¹³, R¹⁴, R¹⁵ and R¹⁶ are aryl substituted by at least one C₂-C₂₀ alkyl group, aromatic heterocyclic substituted by at least one C₂-C₂₀ alkyl group, C₅-C₈ cyclic alkyl or unsubstituted saturated acyclic alkyl; and R⁷, R⁸, R⁹ and R¹⁰ independently are cyano or hydrogen.

## Patentansprüche

1. Verfahren zum Markieren eines flüssigen Erdölkohlenwasserstoffs, wobei das Verfahren das Zugeben von mindestens einem substituierten Anthrachinonfarbstoff mit der Formel (I) zu dem flüssigen Erdölkohlenwasserstoff umfaßt: 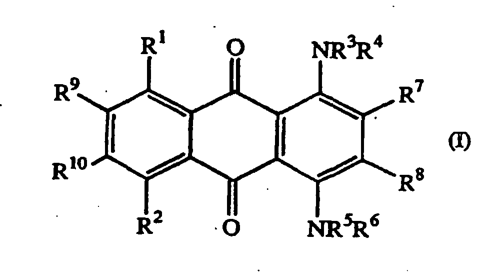 wobei R¹ und R² unabhängig voneinander Wasserstoff, Hydroxy, OR¹¹, Amino oder NR¹¹R¹² sind, R³ und R⁵ unabhängig voneinander Alkyl, Aryl, Aralkyl, Heteroalkyl oder eine heterocyclische Gruppe sind, R⁴ und R⁶ unabhängig voneinander Wasserstoff oder Alkyl sind, R⁷, R⁸, R⁹ und R¹⁰ unabhängig voneinander Cyan, Nitro oder Wasserstoff sind, mit der Maßgabe, daß mindestens zwei der Gruppen R⁷, R⁸, R⁹ und R¹⁰ Cyan oder Nitro sind, R¹¹ Alkyl, Aryl, Aralkyl, Heteroalky, eine heterocyclische Gruppe oder eine Alkanoylgruppe ist, R¹² Wasserstoff oder Alkyl ist, wobei der mindestens eine substituierte Anthrachinonfarbstoff ein Absorptionsmaximum in dem Bereich von 690 nm bis 1000 nm aufweist und wobei weiter die Menge des mindestens einen substituierten Anthrachinonfarbstoffs weniger als 2 ppm beträgt.

2. Verfahren nach Anspruch 1, wobei R⁷, R⁸, R⁹ und R¹⁰ unabhängig voneinander Cyan oder Wasserstoff sind und R¹ und R² Wasserstoff, Hydroxy oder NR¹¹R¹² darstellen.

3. Verfahren nach Anspruch 2, wobei R³ und R⁵ eine cyclische C₅-C₈-Alkylgruppe, eine unsubstituierte gesättigte acyclische Alkylgruppe, eine Arylgruppe, substituiert mit mindestens einer C₂-C₂₀-Alkylgruppe, oder eine aromatische heterocyclische Gruppe, substituiert mit mindestens einer C₂-C₂₀-Alkylgruppe, sind, und wobei der mindestens eine substituierte Anthrachinonfarbstoff ein Absorptionsmaximum in einem Kohlenwasserstofflösungsmittel in dem Bereich von 710 nm bis 970 nm aufweist.

4. Verfahren nach Anspruch 1, weiter umfassend mindestens einen 1,4,5,8-tetrasubstituierten Anthrachinonfarbstoff mit einem Absorptionsmaximum in einem Kohlenwasserstofflösungsmittel von 690 nm bis 800 nm und mit der Formel (VI): 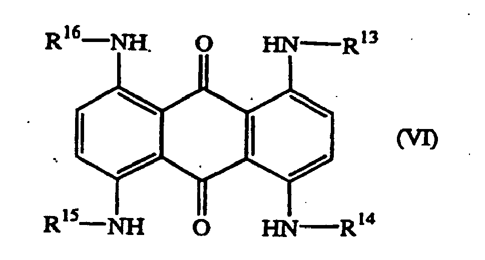 wobei R¹³, R¹⁴, R¹⁵ und R¹⁶ unabhängig voneinander Alkyl, Aryl, Aralkyl, Heteroalkyl oder eine heterocyclische Gruppe sind, mit der Maßgabe, daß der Farbstoff der Formel (I) und der Farbstoff der Formel (VI) Absorptionsmaxima aufweisen, die um mindestens 30 nm getrennt sind.

5. Verfahren nach Anspruch 4, wobei R¹³, R¹⁴, R¹⁵ und R¹⁶ eine Arylgruppe, substituiert mit mindestens einer C₂-C₂₀-Alkylgruppe, eine aromatische heterocyclische Gruppe, substituiert mit mindestens einer C₂-C₂₀-Alkylgruppe, eine cyclische C₅-C₈-Alkylgruppe oder eine unsubstituierte gesättigte acyclische Alkylgruppe sind, und R⁷, R⁸, R⁹ und R¹⁰ unabhängig voneinander Cyan oder Wasserstoff sind.

6. Verfahren nach Anspruch 1, weiter umfassend mindestens einen 1,4,5-trisubstituierten Anthrachinonfarbstoff mit einem Absorptionsmaximum in einem Kohlenwasserstofflösungsmittel von 630 nm bis 700 nm und mit der Formel (IX): 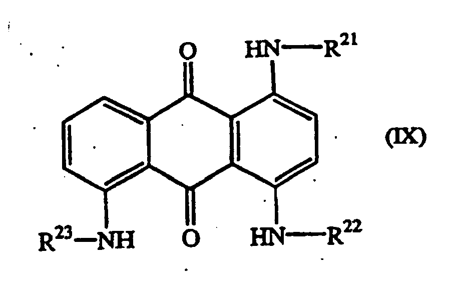 wobei R²¹, R²² und R²³ unabhängig voneinander Alkyl, Aryl, Aralkyl, Heteroalkyl oder eine heterocyclische Gruppe sind, mit der Maßgabe, daß der Farbstoff der Formel (I) und der Farbstoff der Formel (VIII) Absorptionsmaxima aufweisen, die um mindestens 30 nm getrennt sind.

7. Verfahren nach Anspruch 6, wobei R²¹, R²² und R²³ eine Arylgruppe, substituiert mit mindestens einer C₂-C₂₀-Alkylgruppe, oder eine aromatische heterocyclische Gruppe, substituiert mit mindestens einer C₂-C₂₀-Alkylgruppe, sind, und R⁷, R⁸, R⁹ und R¹⁰ unabhängig voneinander Cyan oder Wasserstoff sind.

8. Verfahren nach Anspruch 1, weiter umfassend mindestens einen sichtbaren Farbstoff mit einem Absorptionsmaximum von 550 nm bis 650 nm.

9. Verfahren nach Anspruch 4, weiter umfassend mindestens einen 1,4,5-trisubstituierten Anthrachinonfarbstoff mit einem Absorptionsmaximum in einem Kohlenwasserstofflösungsmittel von 630 nm bis 700 nm und mit der Formel (IX): 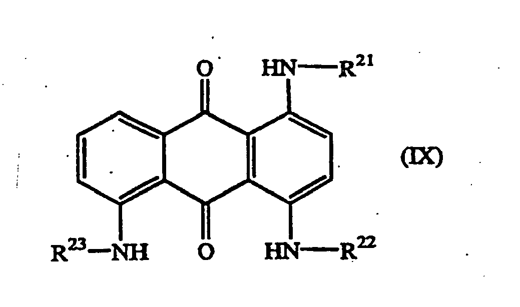 wobei R²¹, R²² und R²³ unabhängig voneinander Alkyl, Aryl, Aralkyl, Heteroalkyl oder eine heterocyclische Gruppe sind, mit der Maßgabe, daß die Absorptionsmaxima von jedwedem Paar der Farbstoffe der Formel (I), Formel (VI) und Formel (IX) um mindestens 30 nm getrennt sind.

10. Verfahren nach Anspruch 9, wobei R¹³, R¹⁴, R¹⁵ und R¹⁶ eine Arylgruppe, substituiert mit mindestens einer C₂-C₂₀-Alkylgruppe, eine aromatische heterocyclische Gruppe, substituiert mit mindestens einer C₂-C₂₀-Alkylgruppe, eine cyclische C₅-C₈-Alkylgruppe oder eine unsubstituierte gesättigte acyclische Alkylgruppe sind, und R⁷, R⁸, R⁹ und R¹⁰ unabhängig voneinander Cyan oder Wasserstoff sind.

## Revendications

1. Procédé de marquage d'un hydrocarbure liquide dérivé du pétrole ; ledit procédé comprenant l'ajout à l'hydrocarbure liquide dérivé du pétrole d'au moins une teinte d'anthraquinone substituée répondant la formule (I) 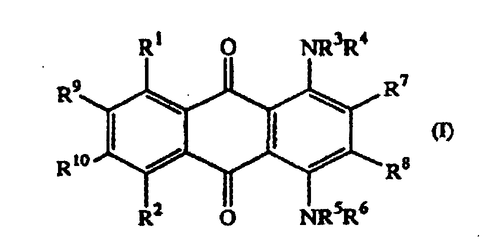 dans laquelle R¹ et R² sont indépendamment un atome d'hydrogène, un groupe hydroxy, OR¹¹, un groupe amino ou NR¹¹ R¹² ; R³ et R⁵ sont indépendamment un groupe alkyle, aryle, aralkyle, hétéroalkyle ou hétérocyclique ; R⁴ et R⁶ sont indépendamment un atome d'hydrogène ou un groupe alkyle ; R⁷, R⁸, R⁹ et R¹⁰ sont indépendamment un groupe cyano, nitro ou un atome d'hydrogène, à la condition qu'au moins deux de R⁷, R⁸, R⁹ et R¹⁰ soient un groupe cyano ou nitro ; R¹¹ est un groupe alkyle, aryle, aralkyle, hétéroalkyle, hétérocyclique ou alcanoyle ; R¹² est un atome d'hydrogène ou un groupe alkyle ; dans lequel ladite au moins une teinte d'anthraquinone substituée a une absorption maximale dans la gamme de 690 nm à 1000 nm , et dans lequel en outre la quantité de ladite au moins une teinte d'anthraquinone substituée est inférieure à 2 ppm.

2. Procédé selon la revendication 1, dans lequel R⁷, R⁸, R⁹ et R¹⁰ sont indépendamment un groupe cyano ou un atome d'hydrogène, et R¹ et R² représentent un atome d'hydrogène, un groupe d'hydroxy ou NR¹¹ R¹².

3. Procédé selon la revendication 2, dans lequel R³ et R⁵ sont un groupe alkyle cyclique en C₅ à C₈, alkyle acyclique saturé non substitué, aryle substitué par au moins un groupe alkyle en C₂ à C₂₀, ou hétérocyclique aromatique substitué par au moins un groupe alkyle en C₂ à C₂₀ ; et ladite au moins teinte d'anthraquinone substituée a une absorption maximale dans un solvant d'hydrocarbure dans la gamme de 710 nm à 970 nm.

4. Procédé selon la revendication 1, comprenant en outre au moins une teinte d'anthraquinone 1, 4, 5, 8 - tétrasubstituée ayant une absorption maximale dans un solvant d'hydrocarbure de 690 nm à 800 nm et répondant à la formule (VI) 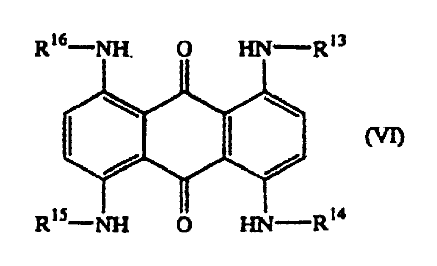 dans laquelle R¹³, R¹⁴, R¹⁵ et R¹⁶ sont indépendamment un groupe alkyle, aryle, aralkyle, hétéroalkyle ou hétérocyclique ; à la condition que les maxima d'absorption de la teinte de la formule (I) et de la teinte de la formule (VI) soient séparés par au moins 30 nm.

5. Procédé selon la revendication 4, dans lequel R¹³, R¹⁴, R¹⁵ et R¹⁶ sont un groupe aryle substitué par au moins un groupe alkyle en C₂ à C₂₀, hétérocyclique aromatique substitué par au moins un groupe alkyle en C₂ à C₂₀, alkyle cyclique en C₅ à C₈ ou alkyle acyclique saturé non substitué ; et R⁷, R⁸, R⁹ et R¹⁰ sont indépendamment un groupe cyano ou un atome d'hydrogène.

6. Procédé selon la revendication 1, comprenant en outre au moins une teinte d'anthraquinone 1,4,5-trisubstituée ayant un maximum d'absorption dans un solvant d'hydrocarbure de 630 nm à 700 nm et répondant à la formule (IX) 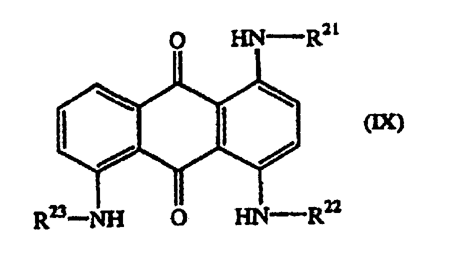 dans laquelle R²¹, R²² et R²³ sont indépendamment un groupe alkyle, aryle, aralkyle, hétéroalkyle ou hétérocyclique ; à la condition que les maxima d'absorption de la teinte de la formule (I) et de la teinte de la formule (VIII) soient séparés d'au moins 30 nm.

7. Procédé selon la revendication 6 dans lequel R²¹, R²² et R²³ sont un groupe aryle substitué par au moins un groupe alkyle en C₂ à C₂₀ ou hétérocyclique aromatique substitué par au moins un groupe alkyle en C₂ à C₂₀ ; et R⁷, R⁸, R⁹ et R¹⁰ sont indépendamment un groupe cyano ou atome d'hydrogène.

8. Procédé selon la revendication 1, comprenant en outre au moins une teinte visible ayant un maximum d'absorption de 550 nm à 650 nm.

9. Procédé selon la revendication 4, comprenant en outre au moins une teinte d'anthraquinone 1,4,5-trisubstitué ayant un maximum d'absorption dans un solvant d'hydrocarbure de 630 nm à 700 nm et répondant à la formule (IX) 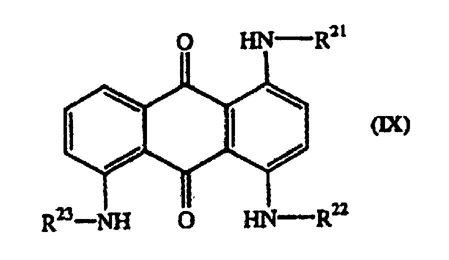 dans laquelle R²¹, R²², et R²³ sont indépendamment un groupe alkyle, aryle, aralkyle, hétéroalkyle ou hétérocyclique ; à la condition que les maxima d'absorption de toute paire des teintes de la formule (I), la formule (VI) et la formule (IX) soient séparés d'au moins 30 nm.

10. Procédé selon la revendication 9, dans lequel R¹³, R¹⁴, R¹⁵ et R¹⁶ sont un groupe aryle substitué par au moins un groupe alkyle en C₂ à C₂₀, hétérocyclique aromatique substitué par au moins un groupe alkyle en C₂ à C₂₀, alkyle cyclique en C₅ à C₈ ou alkyle acyclique saturé non substitué ; et R⁷, R⁸, R⁹ et R¹⁰ sont indépendamment un groupe cyano ou un atome d'hydrogène.
